# EUROPEAN PATENT SPECIFICATION

(11) **EP 0 373 010 B1**
(45) Date of publication and mention of the grant of the patent: **22.06.1994**
(21) Application number: 89402956.0
(22) Date of filing: 26.10.1989
(51) Int. Cl.: G01L 9/04

(54) **Pressure sensor usable in oil wells**
Druckwandler, anwendbar in Ölbohrungen
Capteur de pression utilisable dans les puits de forage de pétrole

(30) Priority: 27.10.1988 FR 8814005
(43) Date of publication of application: 13.06.1990
(73) Proprietor: SOCIETE DE PROSPECTION ELECTRIQUE SCHLUMBERGER, F-75007 Paris (FR); SCHLUMBERGER LIMITED, New York, N.Y. 10172 (US)
(72) Inventor: Petitjean, Luc, F-94300 Vincennes (FR); Valdois, Michel, F-94230 Cachan (FR)
(74) Representative: Hagel, Francis

(56) References cited:
- EP-A- 0 333 091
- DE-A- 3 313 261
- GB-A- 1 069 435
- US-A- 3 820 401
- US-A- 4 586 108

## Description

The invention relates to a pressure sensor, in particular to a pressure sensor for use in hydrocarbon wells.

The sequence of operations to be carried out for the exploitation of an oil reservoir includes, after a well is drilled, an evaluation of the reservoir, and measurements are performed in order to determine the conditions under which the reservoir may be exploited, if at all. This stage is referred to as "testing". The various measurements performed relate to the temperature and the pressure of the fluid in the well. The temperature and pressure sensors to be employed must be capable of withstanding severe conditions of use while remaining reliable throughout the duration of a measuring period, i.e. three to four weeks. Environmental specifications are therefore defined for such sensors. In particular they must be capable of withstanding temperatures in the range -50°C for storage purposes to more than 200°C in operation downhole. They must also be capable of withstanding pressures in the range 1 bar to 1400 bars, i.e. 14x10⁷ Pa. As to operation, reliability specifications lay down accuracy of the measured value, stability, both long term and short term, and hysteresis.

The sensors presently available on the market do not satisfy these specifications in full. One of the types of existing sensor comprises a body with a measurement cell welded inside it. The measurement cell is constituted by a single flat steel substrate having a first insulating layer deposited thereon, followed by a strain gauge circuit, which is in turn covered by a second insulating layer, leaving two metal connection tabs uncovered. The cell is fixed inside the body in sealed manner, i.e. the pressure to be measured is applied to a first face of said cell while the second face of the cell is subjected to a reference pressure, in particular to atmospheric pressure.

Serious drawbacks are inherent to this type of construction.

Firstly, the connection between the measuring element (or sensitive membrane) and the body of the sensor, often performed by welding, is a potential source of instability. The lack of mechanical isolation between the measurement element and the body of the sensor can give rise to differences between measurements observed before and after sensor reassembly, and the clamping couple in particular can have an effect on the output level.

Further, sensor drift is observed when the sensor is subjected to a high pressure for a period of several weeks in a medium whose temperature is also high. This drift can be attributed, in part, to phenomena of anelasticity and creep.

There is disclosed in British patent 1,069,435 a pressure sensor made of a deformable support carrying thin film resistance elements arranged in a bridge configuration. The support is made of a tube of elliptical or oval cross-section, of such material as vitreous silica or sapphire. A pressure difference between the interior and exterior of the tube causes deformation thereof, resulting in differential straining of the resistance elements. However, this patent gives no indication concerning the means of sealing the interior of the tube from the surrounding fluid, which is a crucial item for a sensor intended for use in media such as hydrocarbon wells where pressures of up to 1,400 bars can be encountered, as discussed hereinabove.

Document US-A-3 820 401 discloses a pressure sensor having a cell made of a substrate of type p semiconductor material (silicon) and a strain-measuring circuit formed by diffusion of type n semiconductor material (isolation fields) and type p semiconductor material (resistors). In particular this sensor comprises two portions of the same material, hermetically sealed at a join plane to form an internal chamber at a predetermined pressure. One of the portions is provided with a deformable diaphragm with an outer surface parallel to the join plane into which said strain-measuring circuit (in the form of electrical resistances) is diffused. A sensor of this type is unsuitable for operation in oil wells, where the sensor must be capable of producing satisfactory measurements over an extended period of time under the extremely severe conditions prevailing in oil wells, namely, pressures of up to 1400 bars, and temperatures of up to 200°C. At such high temperatures, with a semiconductor material (silicon) forming the substrate as disclosed by document D1, the substrate would become electrically conductive. The increased conductivity of the substrate would have the undesirable result that leak currents would flow between the resistors through the substrate. Such leak currents would translate into heavy noise and the quality of measurements would be seriously impaired.

The object of the invention is to provide a pressure sensor adapted for use in high pressure media, which presents a high accuracy, which is stable over time and reliable with respect to measurement reproducibility.

There is provided according to the present invention a pressure sensor comprising a cell having its outside surface subjected to the pressure to be measured and defining a hermetically sealed internal chamber in which the pressure is at a low pre-determined value, said cell comprising two portions of the same material joined together according to a join plane, at least one of these portions having in a deformable part thereof a plane outside surface parallel to said join plane, and a strain-measuring device constituted by thin-film electrical resistances deposited on said plane outside surface.

Preferably, at least one of said portions comprises a peripheral wall and a central cap having said circuit deposited thereon, only said central cap being substantially deformable in response to pressure.

The material of the cell is advantageously sapphire, preferably a monocrystal with its crystal axis extending perpendicularly to the join plane between the two portions of the cell, thereby obtaining isotropic stress in the join plane.

The invention and its features will be better understood from reading the following description with reference to the accompanying drawings, in which:
Figure 1 is a section view through a pressure sensor in accordance with the invention and fitted with different half-shells;
Figure 2 is a diagram showing the positioning of the strain gauges and their interconnections on one of the faces of the cell used in the pressure sensor of the invention; and
Figure 3 is a section through the cell on a plane perpendicular to its join plane, for a preferred embodiment of the invention.

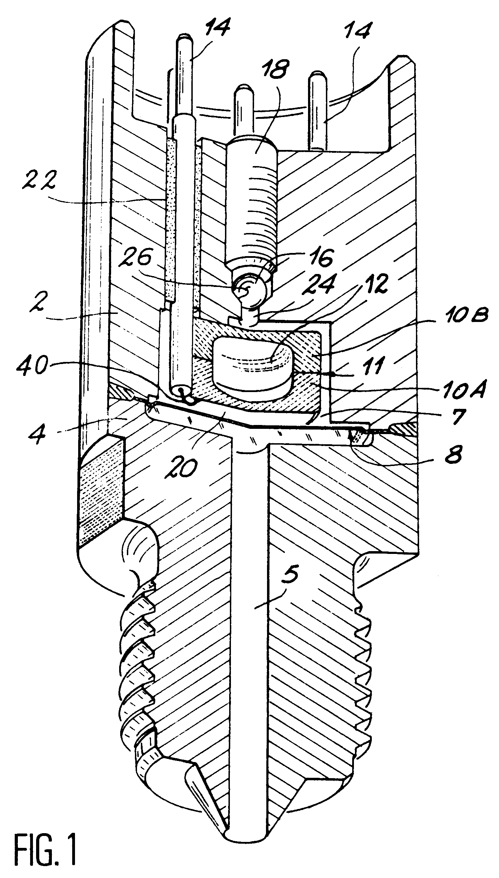

With reference to Figure 1, a pressure sensor of the invention mainly comprises a measurement cell constituted by two parts 10A and 10B placed inside a sensor body. The cell carries a strain-measuring device in the form of electrical resistances which are formed by thin film deposits.

The technique of making thin film deposits is described, in particular, in volume 10 of the technical journal "Thin Solid Films" (1972), and in particular in the article by R.G. Duckworth entitled "Tantalum Thin Film Resistor".

The cell delivers measurement signals which are transmitted via connection means 14 to a system for processing said measurement signals, not shown in the figures.

For assembly purposes, the body is made in two separate parts, namely a main body 2 and a leading body 4 which is fixed securely thereto. The cell is placed inside an internal cavity 7 provided inside the main body 2.

The connection means are constituted by connection cables 14 and sealed feedthroughs 22 passing through the main body 2 in order to open out into the internal cavity 7 around the cell.

The main function of the leading body 4 of the pressure sensor is to put the measurement cell into contact with the surrounding fluid pressure. To this end, the leading body 4 has an axial channel 5 opening out at one end to the outside and at its other end to the internal cavity 7 containing the measurement cell. As a result, the medium outside of the leading body 4 of the sensor penetrates into the axial channel 5 and encounters the measurement cell. However, in order to protect the measurement cell, a membrane 8 is placed between the main body 2 and the leading body 4 in their join plane. The external medium therefore remains on the other side of said membrane 8 without coming into direct contact with the measurement cell. However, the membrane is sufficiently flexible to transmit the pressure of said external medium to the inside of the internal cavity 7 containing the measurement cell. The volume of this cavity as delimited by the membrane 8 is completely filled with oil which thus surrounds the measurement cell. This oil is inserted while the pressure sensor is being assembled, after the two parts 2 and 4 of the body have been assembled to each other, thereby enclosing the membrane 8 and the measurement cell. The pressure inside the internal cavity 7 is then reduced in order to enable the oil to be inserted via a channel 24 made through the main body 2. Once the internal cavity 7 has been completely filled with oil, a pressure ball 16 is pressed against a conical seat 26 located at the outlet from the channel 24. A pressure screw 18 is inserted in an extension to the channel 24 and urges the ball 16 against the seat 26, thereby sealing the internal cavity 7.

It can thus be seen that the entire outside surface of the cell is subjected to the pressure to be measured, and the cell is mechanically isolated from the body 2 of the sensor. This makes it possible to avoid problems related to the mechanical connection of the measurement element as encountered when implementing prior art cells.

In accordance with another main feature of the invention, the cell defines a hermetically sealed internal chamber 12. In order to be able to measure the pressure of the external medium, a predetermined low pressure is established inside the internal chamber 12, which pressure thus serves as a reference pressure for measurement purposes. This pressure is preferably about 0.1 Pascals.

In a preferred embodiment, the measurement cell is made of sapphire, or more precisely of a monocrystaline sapphire such as alumina. This substance has excellent resistance to corrosion. A very important quality of this material, given that the cell carries a strain gauge circuit constituting the measurement element, is that sapphire has perfectly elastic and linear behavior all the way to its breakage point. It has no plasticity at all and it is insensitive to dislocation motion and to creep, phenomena which are responsible, in part, for the drift observed in prior art sensors.

The choice of sapphire as the material for making the cell also has the advantage that sapphire is a good insulator, thus avoiding the need for an insulating layer as is required between the prior art metal substrate and the strain measuring device. Not only does omitting the insulating layer make manufacture of the sensor simpler, it also improves the characteristics of the sensor by eliminating problems relating to the insulating layer becoming less effective as an insulator when subjected to high temperature.

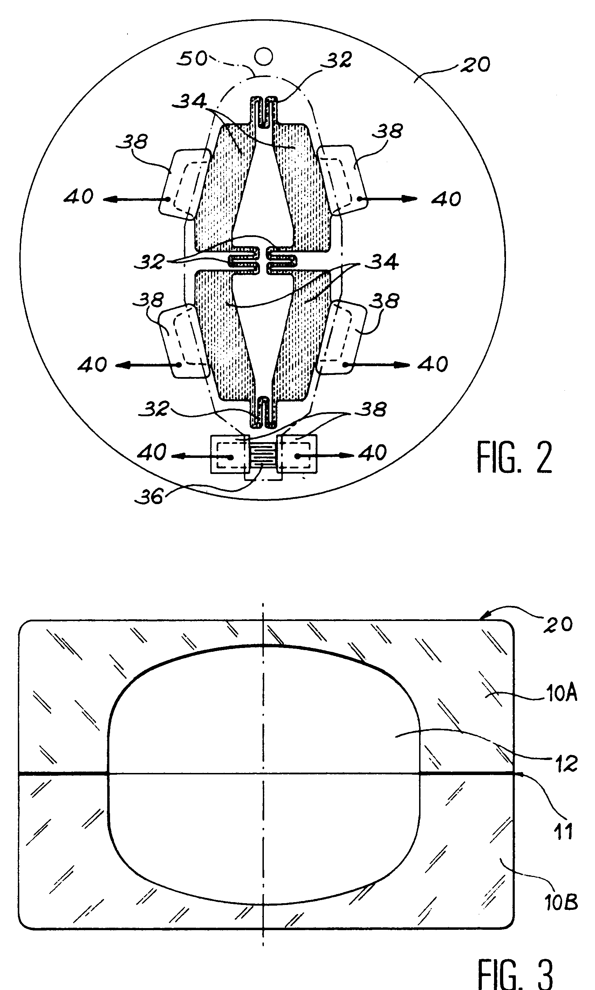

In a suitable embodiment, the measurement cell is formed as two half-shells 10A and 10B each defining an internal half-chamber, as shown in Figure 3. The half-shells are joined in a join plane 11 in such a manner as to form the internal chamber 12. A strain measuring device is placed on a plane face 20 of one of the half-shells 10A, which face is parallel to the join plane 11.

The two half-shells 10A and 10B are joined together in sealed manner by means of a sealing glass which has a coefficient of expansion which is very close to that of sapphire in the join plane 11. The technique used for making such a join is described, in particular, in Swiss patent application No 8272/79, published as No 632 891 G.

The sapphire is preferably a monocrystal and is cut so as to obtain two half-shells 10A and 10B having the same crystal axis. The axis perpendicular to the join plane 11 and to the face 20 on which the strain gauges are deposited constitutes the crystal axis c of the crystal. Since its structure is a hexagonal, sapphire presents deformations, expansions, and stresses which are isotropic in a plane perpendicular to its crystal axis c. For conventions concerning the axis of a crystal, reference may be made to the work by J.F. Nye entitled "Physical Properties of Crystal" published by Oxford University Press, New York, 1985. By choosing to have the crystal axis in this direction, problems due to differential expansion in the join plane 11 which could spoil long term stability of the seal in the join plane are eliminated, thus avoiding problems with long term stability of the sensor.

In figure 1, the two half-shells 10a and 10b are shown as having different internal surfaces for the purpose of showing several of the possible implementations of these two half-shells.

Figure 3 shows a preferred embodiment where the measurement cell comprises half-shells 10A and 10B which are identical. Each half-shell comprises a peripheral wall having the join plane 11 as its end face and cylindrical external and internal surfaces, and a central cap portion having an internal surface in the form of a flattened ellipsoid and a plane external surface. Owing to the symmetry of the cell, this embodiment is optimal from the standpoint of reducing stress in the join plane.

An alternative to the embodiment of Figure 3 comprises one half-shell such as shown at 10A and, instead of half-shell 10B, a cylindrical plate or disk having the same external surface as half-shell 10B, but an internal plane face flush with the join plane. In this case, the internal chamber of the cell will be limited to the upper half of chamber 12 as shown in Figure 3, and the strain-measuring circuit will be deposited on the external surface of half-shell 10A, which would be the only deformable portion of the cell. As in the other embodiments, the two portions of the cell, namely the cylindrical disk and the half-shell will be of the same material, preferably sapphire.

The cell is preferably mounted flexibly inside the internal cavity 7. Spacers of flexible material are inserted on the wall of the internal cavity 7.

The membrane 8 is made of a material having mechanical properties which are stable over the range of temperatures over which the pressure sensor is used. However, it must also exhibit a high degree of elastic deformation in order to transmit pressure of the external medium to the oil surrounding the measurement cell. Good resistance to corrosion in an aqueous medium is required in this application.

Figure 2 shows an electrical resistance strain-measuring device as used in a sensor of the invention. The diameter of the cell at its surface 20 on which the device is implanted, is about 10 millimeters (mm). The device mainly comprises four small resistances 22, also referred to as strain gauges. Their central portions may be no more than 50 micrometers wide. The resistances 32 are interconnected in a Wheatstone bridge configuration. The Wheatstone bridge circuit is placed about the center of the surface 20 of the cell and is disposed symmetrically relative to the center of said surface while being elongate along a diameter thereof. Connections 34 interconnect the resistances 32 and may be made using the same material as the resistances 32 and may be deposited simultaneously therewith. The connections are large in area so as to minimize their electrical resistance. This configuration thus ensures a high degree both of temperature stability and of long term stability. Metal contacts 38 connect the connections 34 via wires 40 to the connection cables 14 received in the sealed feedthroughs 22. A protective layer 50 is placed over the strain-measuring device, so that only the metal contacts 38 show through the protective layer.

On the surface 20 shown in Figure 2, there is a resistance 36 which is placed at the periphery of said surface at a location which is not subjected to deformation under the effect of pressure. This resistance constitutes means for measuring the temperature of the strain-measuring device. This resistance and its connections are made in a manner analogous to the way in which the strain-measuring device is made.

The protective layer 50 for insulating the resistances 32 and the connections 34 also covers the resistance 36. The resistance 36 is similarly connected via two contacts 38 to one of the cables 14 passing through the body 2 via the sealed feedthroughs 22. This makes it possible to place the means for measuring the temperature of the strain-measuring device as close as possible to the device and on the same surface 20.

The temperature measurement obtained in this way can be used to compensate for the effects of temperature on the strain gauges, thereby making it possible to provide a pressure sensor which is insensitive, in practice, to temperature variation.

The strain-measuring device in the form of a Wheatstone bridge is adjusted by balancing the bridge by removing material from the connections 34. This may be done by means of a laser.

## Claims

1. A pressure sensor usable in an oil well, comprising a cell of an insulating material which retains its insulating property at downhole temperatures, said cell in use having its outside surface subjected to the pressure to be measured, said cell comprising two portions of said material joined together at a join plane and defining a hermetically sealed internal chamber in which the pressure is at a pre-determined value, at least one of these portions having a deformable part with a planar outside surface parallel to said join plane, and a strain-measuring device constituted by thin-film electrical resistances deposited on said planar outside surface.

2. A sensor according to claim 1, wherein at least one of said cell portions comprises a peripheral wall and a central cap portion having said resistances deposited thereon, only said cap portion being substantially deformable.

3. A sensor according to claim 2, wherein the cell portions are symmetrical with respect to an axis perpendicular to the join plane.

4. A sensor according to claim 3, wherein in cross-section said cap portion has an internal surface in the form of a flattened ellipsoid.

5. A sensor according to claim 2 or claim 3, wherein the cell portions are identical half-shells.

6. A sensor according to any one of claims 1 to 5, wherein said cell is made of sapphire.

7. A sensor according to claim 6, characterized in that the cell is made of monocrystalline sapphire with the crystal axis (c) thereof being perpendicular to the join plane (11).

## Patentansprüche

1. Ein in einem Ölbohrloch verwendbarer Drucksensor, umfassend eine Zelle aus einem isolierenden Material, das seine Isolationseigenschaft bei untertägigen Temperaturen beibehält, welche Zelle bei der Benutzung mit ihrer Außenoberfläche dem zu messenden Druck ausgesetzt ist, welche Zelle zwei Abschnitte aus dem Material umfaßt, die miteinander an einer Verbindungsebene verbunden sind, und eine hermetisch abgedichtete Innenkammer begrenzen, in der der Druck auf einem vorbestimmten Wert liegt, wobei zumindest einer dieser Abschnitte einen deformierbaren Teil mit einer planaren äußeren Oberfläche parallel zu der Verbindungsebene aufweist, und eine Belastungsmeßeinrichtung, gebildet von elektrischen Dünnfilmwiderständen, die auf der planaren Außenoberfläche angebracht sind.

2. Ein Sensor nach Anspruch 1, bei dem zumindest einer der Zellenabschnitte eine periphere Wandung und einen zentralen Kappenabschnitt umfaßt, auf dem der Schaltkreis angeordnet ist, wobei nur der Kappenabschnitt im wesentlichen deformierbar ist.

3. Ein Sensor nach Anspruch 2, bei dem die Zellenabschnitte symmetrisch bezüglich einer Achse senkrecht auf die Verbindungsebene sind.

4. Ein Sensor nach Anspruch 3, bei dem der Kappenabschnitt im Querschnitt eine Innenoberfläche in Form eines abgeflachten Ellipsoids aufweist.

5. Ein Sensor nach Anspruch 2 oder Anspruch 3, bei dem die Zellenabschnitte identische Halbschalen sind.

6. Ein Sensor nach einem der Ansprüche 1 bis 5, bei dem die Zelle aus Saphir besteht.

7. Ein Sensor nach Anspruch 6, dadurch gekennzeichnet, daß die Zelle aus monokristallinem Saphir besteht mit der Kristallachse (c) desselben senkrecht zu der Verbindungsebene (11).

## Revendications

1. Capteur de pression utilisable dans un puits de pétrole, comprenant une cellule en matériau isolant qui garde sa propriété d'isolation aux températures de fond de puits, ladite cellule ayant, en fonctionnement, sa surface externe soumise à la pression à mesurer, ladite cellule comprenant deux parties dudit matériau jointes l'une à l'autre au niveau d'un plan de jonction et définissant une chambre interne hermétique dans laquelle règne une pression ayant une valeur prédéterminée, au moins l'une desdites parties ayant une partie déformable avec une surface externe plane parallèle audit plan de jonction, et un dispositif de mesure de contrainte constitué de résistances électriques en couches minces, déposées sur ladite surface externe plane.

2. Capteur selon la revendication 1, dans lequel au moins l'une des parties de cellule comprend une paroi périphérique et une calotte centrale portant lesdites résistances déposées, seule ladite calotte étant sensiblement déformable.

3. Capteur selon la revendication 2, dans lequel les parties de cellule sont symétriques par rapport à un axe perpendiculaire au plan de jonction.

4. Capteur selon la revendication 3, dans lequel, en coupe transversale, ladite calotte a une surface interne en forme d'ellipsoïde aplati.

5. Capteur selon la revendication 2 ou 3, dans lequel les parties de cellule sont deux demi-coquilles identiques.

6. Capteur selon l'une des revendications 1 à 5, dans lequel ladite cellule est en saphir.

7. Capteur selon la revendication 6, caractérisé en ce que la cellule est réalisée en saphir monocristallin dont l'axe cristallographique (c) est perpendiculaire au plan de jonction (11).
